# EUROPÄISCHE PATENTSCHRIFT

(11) **EP 1 670 165 B1**
(45) Veröffentlichungstag und Bekanntmachung des Hinweises auf die Patenterteilung: **25.04.2018**
(21) Anmeldenummer: 05022842.8
(22) Anmeldetag: 20.10.2005
(51) Int. Cl.: G10L 21/06, G06T 13/40

(54) **Verfahren und modellbasiertes Audio-und Videosystem zur Darstellung einer virtuellen Figur**
Method and model-based audio and visual system for displaying an avatar
Procédé et système audio et video d'affichage d'un avatar basée sur un modèle

(30) Priorität: 07.12.2004 DE 102004059051
(43) Veröffentlichungstag der Anmeldung: 14.06.2006
(73) Patentinhaber: Deutsche Telekom AG, 53113 Bonn (DE)
(72) Erfinder: Feldes, Stefan, 69469 - Weinheim (DE); Kaspar, Bernhard, Dr. rer.nat., 64646 - Heppenheim (DE); Schuhmacher, Karlheinz, Dipl.-Ing., 64560 - Riedstadt (DE); Johann,Jens, 64347 - Griesheim (DE)
(74) Vertreter: Blumbach · Zinngrebe Patent- und Rechtsanwälte

(56) Entgegenhaltungen:
- US-A- 5 347 306
- US-A1- 2003 028 380
- US-A1- 2004 068 410
- US-A1- 2004 080 507
- US-B1- 6 307 576
- US-B1- 6 657 628
- GOTO T ET AL: "Automatic face cloning and animation/USING REAL-TIME FACIAL FEATURE TRACKING AND SPEECH ACQUISITION" IEEE SIGNAL PROCESSING MAGAZINE, IEEE SERVICE CENTER, PISCATAWAY, NJ, US, Bd. 18, Nr. 3, Mai 2001 (2001-05), Seiten 17-25, XP002962822 ISSN: 1053-5888
- SANNIER G ET AL: "VHD: A SYSTEM FOR DIRECTING REAL-TIME VIRTUAL ACTORS" VISUAL COMPUTER, SPRINGER, BERLIN, DE, Bd. 15, Nr. 7/8, 1999, Seiten 320-329, XP001035256 ISSN: 0178-2789

## Beschreibung

Die Erfindung betrifft ein Verfahren zum Darstellen einer virtuellen Figur, auch Avatar genannt, unter Einsatz eines über Parameter ansteuerbaren Modells sowie ein modellbasiertes Audio- und Videosystem, insbesondere zur Durchführung eines solchen Verfahrens.

Immer häufiger werden Computer-animierte Modelle in audiovisuellen Multimediakommunikationen, wie zum Beispiel Videokonferenzen und Bildtelephonie, verwendet. Ein künftiges Anwendungsszenario für Computer-animierte Modelle kann in der Beratung eines Kunden durch einen Callcenter-Mitarbeiter liegen. Der Callcenter-Mitarbeiter könnte hierbei über ein Bildtelephonsystem mit dem Kunden kommunizieren, ohne dass sein natürliches Aussehen identifiziert werden kann.

In diesem Zusammenhang tritt die Frage auf, wie sich eine natürliche Person auf einem Bildschirm durch eine virtuelle animierte Figur, auch Avatar genannt, darstellen lässt. Mit anderen Worten ist zu klären, wie die virtuelle Figur, die die natürliche Person repräsentiert, animiert, das heißt in ihren Bewegungen, ihrer Mimik und Gestik gesteuert wird.

Zunächst muss ein über Parameter ansteuerbares Modell, welches der virtuellen Figur zugrunde liegt, erzeugt werden. Ein geeignetes Modell und die dazugehörenden Modellparameter, wie zum Beispiel Gesichts- und Bewegungsparameter, werden beispielsweise durch den MPEG (Motion Picture Expert Group)-4-Standard definiert. Gemäß dem MPEG-4-Standard wird ein Konzept zur objektorientierten audiovisuellen Multimediakommunikation definiert, bei dem Audio- und Videodatenströme mit Hilfe einer bestimmten Codierung komprimiert werden, und zwar derart, dass die Daten zum Beispiel über ISDN-Leitungen übertragen werden können.

Die zur Ansteuerung des Modells notwendigen Bewegungs- und Gesichtsparameter werden mit Hilfe besonderer Schätzalgorithmen aus von einer Kamera gelieferten Videosignalen gewonnen.

In dem Aufsatz "MPEG-4 Facial Animation in Video Analysis and Synthesis", International Journal of Imaging Systems and Technology, Springer, vol. 13, no. 5, pp. 245-256, March 2003 beschreibt P. Eisert unter anderem Verfahren zur Schätzung von MPEG-4 Gesichtsanimations-Parametern.

Ferner sind Verfahren bekannt, mit denen aus Sprachsignalen Parameter gewonnen werden, die einen Modellkopf derart ansteuern, dass ein sprechender Kopf entsteht.

Die Druckschrift US 5,347,306 offenbart einen animierten elektronischen Treffplatz, wobei simulierte Teilnehmer als animierte Figuren durch das Erfassen der Position oder Gestik der Teilnehmer angezeigt werden.

Die Druckschrift US 2003/028280 A1 offenbart ein Sprachsystem.

Die Druckschrift US 2004/068410 A1 offenbart eine Mütze mit einem Faservisorsystem.

Die Druckschrift von GOTO T ET AL: "Automatic face cloning and animation/USING REAL-TIME FACIAL FEATURE TRACKING AND SPEECH ACQUISITION" IEEE SIGNAL PROCESSING MAGAZINE, IEEE SERVICE CENTER, PISCATAWAY, NJ, US, Bd. 18, Nr. 3, Mai 2001 (2001 -05), Seiten 17-25, XP002962822 ISSN: 1053-5888, beschäftigt sich mit der Gesichts-Nachbildung auf der Basis von zwei Bildern, deren Kanten ausgewertet werden.

Die Druckschrift von SANNIER G ET AL: "VHD: A SYSTEM FOR DIRECTING REAL-TIME VIRTUAL ACTORS" VISUAL COMPUTER, SPRINGER, BERLIN, DE, Bd. 15, Nr. 7/8, 1999, Seiten 320-329, XP001035256 ISSN: 0178-2789, beschäftigt sich mit der Echtzeit-Animation von virtuellen Figuren auf der Basis von vordefinierten Körperhaltungen.

Aufgabe der vorliegenden Erfindung ist es, aufbauend auf herkömmlichen Computer-animierten Modellen, ein Verfahren sowie ein modellbasiertes Audio- und Videosystem bereitzustellen, die natürliche und künstliche Bewegungsabläufe einer Person berücksichtigen können, um eine virtuelle Figur, welche die Person repräsentiert, zu animieren.

Ein Kerngedanke der Erfindung ist darin zu sehen, eine virtuelle Figur, also einen sogenannten Avatar, mittels "natürlicher" Parameter, die aus Bewegungen und Sprachäußerungen einer natürlichen Person gewonnen werden, und "künstlicher" Parameter, die aus manuellen Vorgaben gewonnen werden, anzusteuern. Die manuellen Vorgaben werden auch High-Level-Merkmale genannt.

Das oben genannte technische Problem löst die Erfindung zum einen durch die Verfahrensschritte gemäß Anspruch 1. Danach ist ein Verfahren zum Darstellen einer virtuellen Figur, eines sogenannten Avatars, unter Einsatz eines über Parameter ansteuerbaren Modells vorgesehen. In einem Schritt wird wenigstens ein über Parameter ansteuerbares Modell, welches eine virtuelle Figur darstellt, abgelegt. Weiterhin werden vorbestimmte Animationsmuster, welche Emotions- und Bewegungsmuster darstellen, als sogenannte High-Level-Merkmale abgelegt. Nach Auswahl wenigstens eines Animationsmusters werden erste Parameter zur Ansteuerung des Modells aus dem wenigstens einen ausgewählten Animationsmuster gewonnen. Zusätzlich werden zweite Parameter zur Ansteuerung des Modells aus den Videosignalen einer mittels Kamera aufgenommenen natürlichen Person und/oder dritte Parameter zur Ansteuerung des Modells aus Sprachsignalen, die Sprachäußerungen der natürlichen Person entsprechen, gewonnen. Die ersten sowie zweiten und dritten Parametern werden gemäß einer Gewichtung zu Steuerparametern, mit denen das Modell letztendlich angesteuert wird, kombiniert, wobei die ersten Parameter den Variationsbereich der zweiten und dritten Parameter festlegen. Das in Abhängigkeit von den Steuerparametern animierte Modell wird auf einem Bildschirm schließlich dargestellt.

Vorteilhafte Weiterbildungen sind Gegenstand der Unteransprüche.

Bei den aus den Videosignalen gewonnen zweiten Parameter handelt es sich um Bewegungs- und Texturparameter, wohingegen es sich bei dem aus den Sprachsignalen gewonnen dritten Parameter um Animationsparameter für Lippen- und Mundbewegungen handelt.

Eine vorteilhafte Weiterbildung ist darin zu sehen, dass die Steuerparameter aus den ersten sowie zweiten und/oder dritten Parametern gemäß einer vorbestimmbaren Kombinationsvorschrift gebildet werden. So kann ein Kombinationsalgorithmus angewandt werden, nach dem die ersten, zweiten und/oder dritten Parameter hinsichtlich ihrer Bedeutung und Wichtigkeit bewertet und anschließend entsprechend dieser Gewichtung kombiniert werden, um die Steuerparameter zu bilden. Nach Anspruch 1 berücksichtigt die vorbestimmbare Vorschrift zur Bildung von Steuerparametern die aus vorbestimmten Animationsmustern ermittelten ersten Parameter, um den Variationsbereich der zweiten und dritten Parameter, die aus Video- und Sprachsignalen gewonnen werden, festzulegen.

Um in ein Sprachsignal gezielt Emotionen einspielen zu können, werden aus einem der vorab gespeicherten Emotionsmuster ein oder mehrere Emotionsmuster ausgewählt, aus denen Prosodieparameter gewonnen werden, die das natürliche Sprachsignal in Abhängigkeit von dem ausgewählten Emotionsmuster hinsichtlich der Stimmmelodie, des Stimmrhythmus und der Stimmlautstärke verändern. Auf diese Weise lässt sich die gewünschte Lebendigkeit erhalten. Die gezielte Modifikation des Sprachsignals wird dadurch gewonnen, dass die aus wenigstens einem ausgewählten Emotionsmuster gewonnenen Prosodieparameter die physikalischen Parameter des Sprachsignals, nämlich die Stimmgrundfrequenz, Sprechgeschwindigkeit sowie Stimmamplitude verändern.

Denkbar ist auch, Sprachsignale der natürlichen Person zu verfremden, um deren Identität zu verbergen.

Anstatt die von einer natürlichen Person herrührenden Sprachsignale mittels der Prosodieparameter zu verändern, ist es auch denkbar, die Prosodieparameter einem Sprachsynthese-Algorithmus zuzuführen, der aus gespeicherten Sprachelementen und/oder Texten Sprachäußerungen für den Avatar erzeugt.

Denkbar ist ferner, nicht nur vorbestimmte Sprachmuster, wie zum Beispiel häufig wiederkehrende Erläuterungen als sogenannte vorbereitete Sprachkonserven, sondern auch den jeweiligen Sprachkonserven zugeordnete Animationsmustern zum Ansteuern eines Avatars zu verwenden.

Auf diese Weise ist es möglich, das Avatarmodell lediglich mit künstlich gewonnen Parametern anzusteuern, ohne dass eine natürliche Person benötigt wird, die als Quelle für natürlich gewonnene Gesichts- und Bewegungsparameter dienen würde.

Das oben genannte technische Problem wird ebenfalls durch die Merkmale des Anspruchs 6 gelöst. Danach ist ein modellbasiertes Audio- und Videosystem vorgesehen, welches insbesondere zur Durchführung des zuvor umschriebenen Verfahrens dient.

Das modellbasierte Audio- und Videosystem weist einen ersten Speicher auf, in dem wenigstens ein über Parameter ansteuerbares Modell, welches eine virtuelle Figur darstellt, abgelegt werden kann. Ein zweiter Speicher ist vorgesehen, in dem vorbestimmte Animationsmuster, welche Emotions- und Bewegungsmuster darstellen, abgelegt sind. Mittels einer Auswahleinrichtung kann wenigstens ein Animationsmuster ausgewählt werden. Aus wenigstens einem ausgewählten vorbestimmten Animationsmuster erzeugt eine erste Erzeugungseinrichtung erste Parameter zur Ansteuerung des Modells. Ferner ist eine Kamera zur Aufnahme einer natürlichen Person vorgesehen. Aus den von der Kamera gelieferten Videosignalen bildet ein Videoanalysator zweite Parameter zur Ansteuerung des Modells. Um Sprachsignale aus Sprachäußerungen einer natürlichen Person erzeugen zu können, ist ferner ein elektroakustischer Wandler vorgesehen. Aus den vom elektroakustischen Wandler gelieferten Sprachsignalen gewinnt eine Phonem-/Visem-Umsetzeinrichtung dritte Parameter zur Ansteuerung des Modells. Um aus den ersten, zweiten und dritten Parametern Steuerparameter bilden zu können, ist eine zweite Erzeugungseinrichtung vorgesehen, die gemäß einer Gewichtung und anschließender Kombination betrieben wird, wobei die ersten Parameter den Variationsbereich der zweiten und dritten Parameter festlegen. Um das in Abhängigkeit von den Steuerparametern veränderte Modell graphisch darstellen zu können, ist eine Wiedergabeeinrichtung vorgesehen.

Gemäß einem besonderen Gesichtspunkt der Erfindung verwendet die zweite Erzeugungseinrichtung eine Kombinationslogik, mit deren Hilfe die ersten, zweiten und/oder dritten Parameter in vorbestimmbarer Weise gewichtet und kombiniert werden können, um die Steuerparameter zu bilden.

Um aus ausgewählten vorbestimmten Animationsmustern erste Parameter erzeugen zu können, weist die erste Erzeugungseinrichtung einen Emotionsanalysator zum Erzeugen von definierten Emotionsparametern, die zu ausgewählten Emotionsmustern gehören, sowie einen Bewegungsanalysator zum Bilden von definierten Bewegungsparametern, die zu ausgewählten Bewegungsmustern gehören, auf.

Vorteilhafterweise ist die zweite Erzeugungseinrichtung zum beliebigen Auswählen der ersten, zweiten und/oder dritten Parameter ausgebildet. Auf diese Wiese ist es möglich, dass zum Ansteuern des Modells nur die ersten Parameter verwendet werden, die aus den vorbestimmten ausgewählten Animationsmustern gewonnen worden sind.

Um nicht nur die Bewegungen des Avatars durch vorab gespeicherte Animationsmuster beeinflussen zu können, ist ein Audioanalysator vorgesehen, der aus wenigstens einem ausgewählten Emotionsmuster Prosodieparameter gewinnt.
In Abhängigkeit von den Prosodieparametern modifiziert eine Sprachmodifizierungseinrichtung die vom elektroakustischen Wandler kommenden Sprachsignale, wobei die modifizierten Sprachsignale einer akustischen Wiedergabeeinrichtung zuführbar sind.

Vorzugsweise kann der Sprachmodifizierungseinrichtung ein Sprachsynthetisator zugeordnet sein, der dazu verwendet werden kann, den Avatar mit einer Sprachfähigkeit auszustatten, auch wenn eine natürliche Person nicht vorhanden ist.

Für diesen Fall kann ein dritter, dem Sprachsynthetisator zugeordneter Speicher vorgesehen sein, in dem vorbestimmte Sprachmuster abgelegt sind.

Ferner kann eine Einrichtung vorgesehen sein, die einem oder mehreren Sprachmustern ein oder mehrere Animationsmuster zuordnet, um den abgelegten Sprachmustern in gezielter Weise eine gewisse Lebendigkeit zu vermitteln.

Das über Parameter ansteuerbare Modell kann ein Gesichts- oder ein Gesichts- und Körpermodell nach dem MPEG-4-Standard sein. In diesem Fall ist dafür Sorge zu tragen, dass die ersten, zweiten und/oder dritten Parameter ebenfalls dem MPEG-4-Standard genügen.

Anzumerken ist jedoch, dass das in der Erfindung verwendete über Parameter ansteuerbare Modell nicht an einen bestimmten Standard gebunden ist.

Ebenso stellt die Erfindung sicher, dass zur Ansteuerung des Modells Parameter verwendet werden können, die nicht zum Modell kompatibel sind. Hierzu ist erforderlich, dass die zweite Erzeugungseinrichtung zum Umsetzen der Steuerparameter, der ersten, zweiten und/oder dritten Parameter in ein zum Modell kompatibles Format ausgebildet ist.

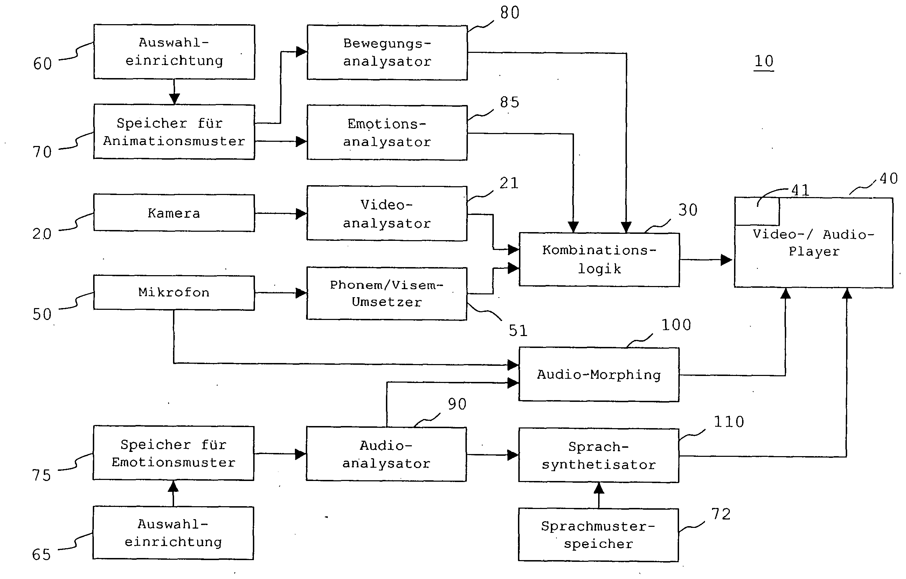

Die Erfindung wird nachfolgend anhand eines Ausführungsbeispiels in Verbindung mit der beiliegenden Zeichnung näher erläutert.

Die einzige Figur zeigt ein beispielhaftes modellbasiertes Audio- und Videosystem 10, in dem die Erfindung verwirklicht ist. Das modellbasierte Audio- und Videosystem 10 weist einen Video-/Audioplayer 40 auf, der dem MPEG-4-Standard genügen kann. In einem dem Video-/Audioplayer 40 zugeordneten Speicher 41 ist ein über Parameter ansteuerbares Modell hinterlegt, welches eine virtuelle, animierbare Figur, einen sogenannten Avatar, darstellt.

Wie eingangs bereit erwähnt, gibt es bereits Lösungsansätze, die insbesondere auf dem MPEG-4-Standard beruhen, wie Modelle über Gesichts- und Körperparameter angesteuert werden können. Hierzu ist eine Kamera 20, vorzugsweise eine Videokamera vorgesehen, die eine natürliche Person in einer Telekommunikationsumgebung aufnimmt. Die von der Kamera 20 erzeugten Videosignale werden einem Videoanalysator 21, auch Video-Tracker genannt, zugeführt, der unter Anwendung entsprechender Bildanalyse-Algorithmen die natürliche Person in der aufgenommen Szenerie findet. Derartige Video-Tracker sind allgemein bekannt, und nicht Gegenstand der Erfindung. In an sich bekannter Weise identifiziert der Video-Analysator 21 mit Hilfe des Bildanalyse-Algorithmus Körperteile wie Kopf, Hals, Schultern, Augen usw. und erzeugt aus diesen Daten natürliche Bewegungs- und Texturparameter, mit denen das im Video-/Audioplayer 40 abgelegte Modell angesteuert werden kann. Die natürlichen Bewegungs- und Texturparameter werden an einen ersten Eingang einer Kombinationslogik 30 angelegt, deren Funktionsweise noch erläutert wird.

Um auch natürliche Sprachsignale zur Ansteuerung des Modells heranziehen zu können, ist in der Telekommunikationsumgebung ferner ein Mikrophon 50 aufgestellt, welches die von einer natürlichen Person gebildeten Sprachäußerungen in Sprachsignale umwandelt. Das Sprachsignal wird in einem Phonem-/Visem-Umsetzer 51 ausgewertet, um Animationsparameter für eine visuelle Darstellung der Lippen und des Mundes beim Sprechen zu gewinnen. Dazu wird mit Hilfe eines Phonem-Erkenners, der Bestandteil des Phonem-/Visem-Umsetzers 51 ist, die Abfolge der gesprochenen Phoneme einer Sprachäußerung geschätzt. Aus der Abfolge der Phoneme kann dann eine entsprechende Abfolge von zugehörigen Mundstellungen abgeleitet werden, die die Lippenstellung, sichtbare Zähne und gegebenenfalls Zunge umfasst. Diese Informationen werden als Viseme bezeichnet und können wiederum in einer entsprechende Parameterform dargestellt werden. Die vom Phonem-/Visem-Umsetzer 51 erzeugten Animationsparameter für Lippen und Mund werden ebenfalls der Kombinationslogik 30 zugeführt.

Um die von einer natürlichen Person herrührenden Parameter zur Gesichts- und Bewegungssteuerung des Modells in gezielter Weise, und zwar unabhängig von den Bewegungen, der Mimik und der Gestik einer natürlichen Person modifizieren zu können, werden mehrere Animationsmuster in einem Speicher 70 abgelegt. Bei den Animationsmustern kann es sich um gewünschte Bewegungsmuster, gewünschte Emotionen und Texturfarben handeln. Ein gewünschtes Bewegungsmuster kann beispielsweise unter dem Befehl "zeige nach links oben" aufgerufen werden. Als Emotionsmuster können beliebige Stimmungen, wie zum Beispiel fröhlich, ernst, ärgerlich usw. darstellende Animationsmuster abgespeichert sein. Emotionen darstellende Animationsmuster werden somit als Emotionsmuster bezeichnet.

Wählt ein Anwender eine derartige Emotion oder Stimmung aus, so soll eine visuelle Darstellung des Avatars unabhängig von der tatsächlichen Stimmung der natürlichen Person diese Stimmung widerspiegeln. Die Auswahl eines oder mehrerer Animationsmuster im Speicher 70 erfolgt über eine Auswahleinrichtung 60, die manuell von einem Anwender betätigt oder auch automatisiert entsprechend einer bestimmten Mustervorgabe betätigt werden kann. Die über die Auswahleinrichtung 60 ausgewählten Animationsmuster werden über den Speicher 70 einem Emotionsanalysator 85 und einem Bewegungsanalysator 80 zugeführt, die aus den entsprechend ausgewählten Animationsmustern Emotions- bzw. Bewegungsparameter erzeugen, welche ebenfalls der Kombinationslogik 30 zugeführt werden. Um nicht nur Gesichts- und Bewegungsparameter gezielt, das heißt unabhängig von der Stimmung und den Bewegungen einer natürlichen Person, sondern auch die Sprache in emotionaler Hinsicht verändern zu können, kann ein weiterer Speicher 75 vorgesehen sein, in dem Emotionsmuster abgelegt sein können. An dieser Stelle sei darauf hingewiesen, dass die beiden Speicher 70 und 75 Bestandteil eines Speichernetzes, oder in einer gemeinsamen Speichereinrichtung implementiert sein können. Über eine separate Auswahleinrichtung 65 oder die Auswahleinrichtung 60 können bestimmte Emotionsmuster ausgewählt werden, die einem Audioanalysator 90 zugeführt werden, der aus den ausgewählten Emotionsmustern Prosodieparameter gewinnt. Die Prosodieparameter werden wiederum einer Sprachmodifizierungseinrichtung 100, die auch Audio-Morphing-Einrichtung genannt wird, zugeführt. Der Audio-Morphing-Einrichtung 100 werden ebenfalls die vom Mikrophon 50 erzeugten Sprachsignale einer natürlichen Person zugeführt. Die am Ausgang der Audio-Morphing-Einrichtung 100 anstehenden modifizierten Sprachsignale werden direkt dem Video-/Audioplayer 40 zur Wiedergabe zugeführt.

Bei der Nutzung einer Sprachsysnthese, mit der eine Stimme für den Avatar erzeugt wird, kann ein Sprachsynthetisator 110 vorgesehen sein, der unmittelbar mit dem Video-/Audioplayer 40 verbunden ist. Vorbestimmte, immer wieder benötigte Sprachmuster und/oder Texte können in einem Sprachmusterspeicher 72 abgelegt werden, der die Sprachmuster dem Sprachsynthetisator 110 zuführt. Um die vorbestimmten Sprachmuster und/oder Texte emotional verändern zu können, werden die vom Audioanalysator erzeugten Prosodieparamter direkt in den Sprachsynthetisator eingespeist.

Es ist ein besonderer Verdienst der Erfindung, dass die von einer natürlichen Person herrührenden Gesichts- und Körperparameter zur Ansteuerung des Modells gezielt durch künstliche, d. h. vorab definierte Stimmungs- und Bewegungsmuster, modifiziert werden können. Dank der Erfindung ist es ebenfalls möglich, die von einer natürlichen Person herrührenden Sprachsignale gezielt durch künstliche Emotionsmuster zu verändern.

An dieser Stelle sei noch einmal betont, dass die von der Kombinationslogik 30 gelieferten Steuerparameter in einer Form vorliegen müssen, die zu dem Avatar-Modell kompatibel sind. Das heißt aber auch, dass die von dem Videoanalysator 21, dem Phonem-/Visem-Umsetzer 51, dem Bewegungsanalysator 80 und dem Emotionsanalysator 85 kommenden Parameter nicht zwangsläufig ein zum Avatar-Modell kompatibles Format aufweisen müssen. Wenn keine Kompatibilität vorliegt, ist in der Kombinationslogik 30 eine entsprechende Anpassungseinrichtung zu implementieren.

Nachfolgend wird die Funktionsweise des modellbasierten Audio-/Video-Systems 10 anhand einiger beispielhafter Szenarien erläutert.

Angenommen sei, dass unabhängig von der tatsächlichen Bewegung einer natürlichen Person der Avatar einen vorbestimmten Bewegungsablauf wiedergeben soll. So kann ein Anwender an der Auswahleinrichtung 60 einen Bewegungsbefehl "zeige nach links oben" eingeben. Entsprechend dem Bewegungsbefehl werden aus dem Speicher 70 mehrere dazu gehörende Bewegungsmuster dem Bewegungsanalysator 80 zugeführt, der aus den erhaltenen Bewegungsmustern Bewegungsparameter erzeugt, die einen vollständigen Bewegungsablauf widerspiegeln. Die dem Bewegungsbefehl "zeige nach links oben" zugeordneten Bewegungsparameter werden von der Kombinationslogik 30 unmittelbar zur Ansteuerung des Avatar-Modells dem Video-/Audioplayer 40 zugeführt. Die Bewegungsparameter bewirken, dass das den Avatar darstellende Modell den Arm hebt, den Zeigefinger ausstreckt und nach links oben zeigt. Die Kombinationslogik 30 sorgt in diesem Fall dafür, dass die vom Videoanalysator 21 und vom Phonem-/Visem-Umsetzer 51 kommenden Bewegungsparameter nicht die vom Bewegungsanalysator 80 kommenden künstlichen Bewegungsparameter beeinflussen.

Alternativ oder ergänzend kann ein Anwender über die Auswahleinrichtung 60 eine bestimmte Stimmung, wie zum Beispiel fröhlich, ernst, ärgerlich oder dergleichen auswählen. Wählt der Anwender eine derartige Stimmung aus, so wird das dazugehörende, im Speicher 70 abgelegte Emotionsmuster dem Emotionsanalysator 85 zugeführt, der die zur gewünschten Emotion oder Stimmung gehörenden Emotionsparameter bildet und der Kombinationslogik 30 zuführt. Soll die ausgewählte Stimmung die visuelle Darstellung des Avatars allein, d. h. unabhängig von der tatsächlichen Stimmung des Anwenders widerspiegeln, so sorgt die Kombinationslogik 30 dafür, dass ausschließlich die vom Emotionsanalysator 85 gebildeten Emotionsparameter dem Video-/Audioplayer 40 zugeführt werden und das darin abgelegte Modell entsprechend ansteuern. Der Video-/Audioplayer 40 verfügt über einen Bildschirm, über den dann der entsprechend angesteuerte Avatar dargestellt werden kann.

An dieser Stelle sei darauf hingewiesen, dass die Umsetzung der vorab abgelegten Emotionsmuster auf die dazugehörenden Emotionsparameter anders als bei vorbestimmten Bewegungsabläufen nicht als festes Muster von Parameterabfolgen realisiert werden kann, sondern die Berechnung spezifischer Randbedingungen und Vorgaben für die Parameter und deren zeitliche Verläufe erfordert. So wirkt sich beispielsweise das ausgewählte Emotionsmuster "fröhlich" auf die Position der Mundwinkel derart aus, dass sie nach oben gezogen werden. Darüber hinaus bewirkt das Emotionsmuster "fröhlich" im Gegensatz zu dem Emotionsmuster "traurig" insgesamt eine verstärkte Lebendigkeit, das heißt, die zu dem Emotionsmuster "fröhlich" gehörenden Emotionsparameter werden über die Zeit gesehen stärker schwanken.

Wie bereits erwähnt, kann die Kombinationslogik 30 durch Anwendung eines entsprechenden Gewichtungsalgorithmus aus den vom Videoanalysator 21, vom Phonem-/Visem-Umsetzer 51, dem Emotionsanalysator 85 und dem Bewegungsanalysator 80 kommenden Parametern eine einzige Abfolge von Steuerparametern erzeugen, die zur Ansteuerung des Avatar-Modells in dem Video-/Audioplayer 40 genutzt wird. Hierbei bringt die Kombinationslogik 30 die vom Videoanalysator 21 und Phonem-/Visem-Umsetzer 51 erzeugten natürlichen Parameter in Einklang mit den manuell ausgewählten Animationsmustern. Für das oben genannte Beispiel, bei dem als Emotionsmuster die Stimmung "fröhlich" ausgewählt worden ist, heißt das, dass die Variationsbreite hinsichtlich der vom Videoanalysator 21 und Phonem-/Visem-Umsetzer 51 kommenden Parameter vergrößert wird, falls die natürlichen Bewegungsparameter dies nicht ausreichend erfüllen. Darüber hinaus kann die Kombinationslogik 30 dafür sorgen, dass zur Ansteuerung der Mundpartie des Modells ein Abgleich zwischen der visuellen Information des Videoanalysators 21 und den aus dem Phonem-/Visem-Umsetzer geschätzten Visem-Informationen stattfindet. Somit kann die Kombinationslogik 30 weiter dafür sorgen, dass für den Fall, dass der Videoanalysator 21 keine Informationen liefert, die vom Phonem-/Visem-Umsetzer 51 bereitgestellte Visem-Information allein für die Mundbewegung des Avatar-Modells herangezogen wird.

Ebenfalls ist es denkbar, dass die Kombinationslogik 30 die vom Videoanalysator 21 und/oder Phonem-/Visem-Umsetzer 51 kommenden natürlichen Bewegungsparameter nicht berücksichtigt, oder überhaupt keine Informationen vom Videoanalysator 21 und/oder vom Phonem-/Visem-Umsetzer 51 erhält. In diesem Fall ist es möglich, dass das im Video-/Audioplayer 40 abgelegte Avatar-Modell ausschließlich mit Hilfe der Auswahleinrichtung 60 gesteuert wird, indem entsprechende Animationsmuster aus dem Speicher 70 ausgelesen und dem Emotionsanalysator 85 und/oder dem Bewegungsanalysator 80 zugeführt werden. Die Kombinationslogik 30 leitet dann die entsprechenden Bewegungs- und/oder Emotionsparameter der ausgewählten Animationsmuster zur Ansteuerung des Avatar-Modells dem Video-/Audioplayer 40 zu. Nicht nur die von einer natürlichen Person herrührenden natürlichen Bewegungsinformationen, sondern auch die Sprachsignale einer Sprachäußerung einer natürlichen Person können durch vordefinierte, im Speicher 75 abgelegte Emotionsmuster verändert werden. Wird beispielsweise über die Auswahleinrichtung 65 das Emotionsmuster "fröhlich" im Speicher 75 ausgewählt, so sollten Stimm-Melodie, StimmRhythmus und Stimm-Lautstärke des über das Mikrophon 50 erzeugten Sprachsignals eine entsprechende Lebendigkeit widerspiegeln. Hierzu erzeugt der Audioanalysator 90 aus dem ausgewählten Emotionsmuster "fröhlich" sogenannte Prosodieparameter, die die Stimmgrundfrequenz, Sprechgeschwindigkeit sowie Stimmamplitude des natürlichen Sprachsignals verändern. Das derart veränderte natürliche Sprachsignal wird von der Audio-Morphing-Einrichtung 100 zum Video-/Audioplayer 40 übertragen. Der Video-/Audioplayer 40 sorgt dafür, dass zwischen der Mundbewegung des Avatar-Modells und der wiederzugebenden Sprachäußerung eine Synchronisation erfolgt.

Ein weiterer Aspekt der Erfindung ist darin zu sehen, dass ein Avatar-Modell über Emotions-, Bewegungs- und/oder Sprachparameter angesteuert werden kann, die allesamt aus Bewegungs- und Sprachinformationen einer natürlichen Person gebildet werden, die jedoch je nach Wunsch des Anwenders durch künstliche Emotions-, Bewegungs- und/oder Audioparameter gezielt verändert, oder sogar vollständig ersetzt werden können.

So ist es denkbar, dass das Auslösen von Gestik, Mimik und Mundbewegungen des Avatar-Modells über die in den Speichern 70 und 75 hinterlegten Animations- beziehungsweise Emotionsmuster erfolgt, indem komplette, vorproduzierte Abfolgen von hinterlegten Animationsmustern abgespielt werden. Weiterhin wäre es möglich, dass ein Anwender noch nicht einmal selbst sprechen muss, sondern statt dessen eine gewünschte Szene durch Auswahl vorgegebener Animations- und Sprachmuster auswählt, die dann zur Animation des Avatarmodells zugrunde gelegt werden.

Häufig wiederkehrende Erläuterungen, die im Speicher 72 abgelegt sind, können auf diese Weise als vorbereitete Sprachkonserven über den Sprachsynthetisator 110 zusammen mit den zugehörenden Animationmustern dem Video-/Audio-Player 40 zur Wiedergabe zugeführt werden. So könnten beispielsweise im Sprachmusterspeicher 72 abgelegte häufig gestellte Fragen (frequently asked questions) ausgewählt werden, wobei eine nicht dargestellte Steuerlogik dafür sorgt, dass die zum ausgewählten Sprachmuster gehörenden, im Speicher 70 hinterlegten Animationsmuster automatisch ausgewählt und über den Emotionsanalysator 85 und/oder Bewegungsanalysator 80 sowie über die Kombinationslogik 30 dem Video-/Audioplayer 40 zugeführt werden. Der Video-/Audioplayer 40 könnte dafür sorgen, dass die vom Bewegungsanalysator 80 gelieferten Bewegungsparameter synchron mit der künstlich erzeugten Sprache ausgegeben werden, so dass Mund- und Lippenbewegung des Avatar-Modells mit den gesprochenen Worten übereinstimmen.

## Patentansprüche

1. Verfahren zum Darstellen einer virtuellen Figur unter Einsatz eines über Parameter ansteuerbaren Modells,
mit folgenden Schritten:
es wird ein über Parameter ansteuerbares Modell, welches eine virtuelle Figur darstellt, abgelegt;
vorbestimmte Animationsmuster, welche Emotions- und Bewegungsmuster darstellen, werden in einem Speicher abgelegt;
wenigstens ein Animationsmuster wird ausgewählt;
erste Parameter zur Ansteuerung des Modells werden aus dem wenigstens einen ausgewählten Animationsmuster gewonnen; zudem
werden zweite Parameter zur Ansteuerung des Modells aus den Videoinformationen einer mittels Kamera aufgenommenen natürlichen Person und dritte Parameter zur Ansteuerung des Modells aus Sprachsignalen, die Sprachäußerungen der natürlichen Person entsprechen, gewonnen; **dadurch gekennzeichnet, dass**
die ersten, zweiten und dritten Parameter gemäß einer Gewichtung zu Steuerparametern, mit denen das Modell angesteuert wird, kombiniert werden, wobei die ersten Parameter den Variationsbereich der zweiten und dritten Parameter festlegen; das in Abhängigkeit von den Steuerparametern animierte Modell auf einer Anzeigeeinrichtung dargestellt wird.

2. Verfahren nach Anspruch 1,
**dadurch gekennzeichnet, dass**
die ersten, zweiten und/oder dritten Parameter in vorbestimmter Weise gewichtet und anschließend kombiniert werden, um die Steuerparameter zu bilden.

3. Verfahren nach einem der Ansprüche 1 bis 2, **dadurch gekennzeichnet, dass**
Prosodieparameter aus wenigstens einem ausgewählten Emotionsmuster gewonnen werden, und dass
die Sprachsignale, die Sprachäußerungen der natürlichen Person entsprechen, in Abhängigkeit von den Prosodieparametern modifiziert (Audio-Morphing) und akustisch wiedergegeben werden.

4. Verfahren nach einem der Ansprüche 1 bis 3, **dadurch gekennzeichnet, dass**
vorbestimmte Sprachmuster abgelegt werden und dass wenigstens ein vorbestimmtes Sprachmuster ausgewählt und akustisch wiedergegeben wird.

5. Verfahren nach einem der Ansprüche 1 bis 4, **dadurch gekennzeichnet, dass**
die zweiten Parameter Bewegungs- und Texturparameter und die dritten Parameter Animationsparameter für Lippen- und Mundbewegungen enthalten.

6. Modellbasiertes Audio- und Videosystem insbesondere zur Durchführung des Verfahrens nach einem der Ansprüche 1 bis 5, mit einem ersten Speicher (41), in dem wenigstens ein über Parameter ansteuerbares Modell, welches eine virtuelle Figur darstellt, abgelegt werden kann,
einem zweiten Speicher (70), in dem vorbestimmte Animationsmuster, welche Emotions- und Bewegungsmuster darstellen, abgelegt sind; einer Einrichtung (60) zum Auswählen wenigstens eines Animationsmuster;
einer ersten Erzeugungseinrichtung (80, 85) zum Erzeugen erster Parameter zur Ansteuerung des Modells aus wenigstens einem ausgewählten vorbestimmten Animationsmuster,
einer Kamera (20) zur Aufnahme einer natürlichen Person,
einem Videoanalysator (21) zum Gewinnen zweiter Parameter zur Ansteuerung des Modells aus den von der Kamera (20) gelieferten Videosignalen,
einem elektroakustischen Wandler (50) zum Erzeugen von Sprachsignalen aus Sprachäußerungen einer natürlichen Person,
einer Phonem-/Visem-Umsetzeinrichtung (51) zum Gewinnen dritter Parameter zur Ansteuerung des Modells aus den vom elektroakustischen Wandler (50) gelieferten Sprachsignalen, **gekennzeichnet durch**
eine zweite Erzeugungseinrichtung (30) zum Bilden von Steuerparametern aus den ersten, zweiten und dritten Parametern gemäß einer Gewichtung und anschließender Kombination, wobei die ersten Parameter den Variationsbereich der zweiten und dritten Parameter festlegen und eine Wiedergabeeinrichtung (40) zum Darstellen des in Abhängigkeit von den Steuerparametern veränderten Modells.

7. Modellbasiertes Audio- und Videosystem nach Anspruch 6 **dadurch gekennzeichnet, dass**
die zweite Erzeugungseinrichtung (30) eine Kombinationslogik enthält, die die ersten, zweiten und/oder dritten Parameter in vorbestimmbarer Weise gewichtet und kombiniert, um die Steuerparameter zu bilden.

8. Modellbasiertes Audio- und Videosystem nach Anspruch 6 oder, **dadurch gekennzeichnet, dass**
die erste Erzeugungseinrichtung einen Emotionsanalysator (85) zum Erzeugen von definierten Emotionsparametern, die zu ausgewählten Emotionsmustern gehören, und einen Bewegungsanalysator (80) zum Bilden von definierten Bewegungsparametern, die zu ausgewählten Bewegungsmuster gehören, aufweist.

9. Modellbasiertes Audio- und Videosystem nach einem der Ansprüche 6 bis 8, **dadurch gekennzeichnet, dass**
die zweite Erzeugungseinrichtung (30) zum gezielten Auswählen der ersten zweiten und/oder dritten Parameter ausgebildet ist.

10. Modellbasiertes Audio- und Videosystem nach einem der Ansprüche 6 bis 9, **gekennzeichnet durch**
einen Audioanalysator (90), der aus wenigstens einem ausgewählten Emotionsmuster Prosodieparameter gewinnt,
eine Sprachmodifizierungseinrichtung (100), die die vom elektroakustischen Wandler (50) kommenden Sprachsignale in Abhängigkeit von den Prosodieparametern modifiziert und die modifizierten Sprachsignale einer akustischen Wiedergabeeinrichtung (40) zuführt.

11. Modellbasiertes Audio- und Videosystem nach einem der Ansprüche 6 bis 10, **gekennzeichnet durch**
eine Sprachmodifizierungseinrichtung (100), die die vom elektroakustischen Wandler (50) kommenden Sprachsignale verfremden kann.

12. Modellbasiertes Audio- und Videosystem nach Anspruch 10, **gekennzeichnet durch**
einen Sprachsynthetisator (110), der mit dem Audioanalysator (90) verbunden sein kann.

13. Modellbasiertes Audio- und Videosystem nach Anspruch 12 **gekennzeichnet durch**
einen dritten dem Sprachsynthetisator (110) zugeordneten Speicher (72), in dem vorbestimmte Sprachmuster und/oder Texte abgelegt sind, und
eine Zuordnungseinrichtung, die einem oder mehreren Sprachmustern und/oder Texten ein oder mehrere Animationsmuster zuordnen kann.

14. Modellbasiertes Audio- und Videosystem nach einem der Ansprüche 6 bis 13, **dadurch gekennzeichnet, dass**
die zweiten Parameter Bewegungs- und Texturparameter und die dritten Parameter Animationsparameter für Lippen- und Mundbewegungen enthalten.

15. Modellbasiertes Audio- und Videosystem nach einem der Ansprüche 6 bis 14, **dadurch gekennzeichnet, dass**
das über Parameter ansteuerbare Modell ein Gesichts- oder ein Gesichts- und Körpermodell insbesondere nach dem MPEG-4-Standard ist.

16. Modellbasiertes Audio- und Videosystem nach einem der Ansprüche 6 bis 15, **dadurch gekennzeichnet, dass**
die zweite Erzeugungseinrichtung (30) zum Umsetzen der Steuerparameter, der ersten, zweiten und/oder dritten Parameter in ein zum Modell kompatibles Format ausgebildet ist.

## Claims

1. A method for representing a virtual figure using a parameter-controllable model, comprising the following steps:
a parameter-controllable model representing a virtual figure is stored;
predetermined animation patterns representing emotion and movement patterns are stored in a memory;
at least one animation pattern is selected;
first parameters for controlling the model are derived from the at least one selected animation pattern; furthermore
second parameters for controlling the model are derived from video information of a natural person captured by a camera; and
third parameters for controlling the model are derived from speech signals corresponding to speech utterances of the natural person;
**characterized in that**
the first, second and third parameters are combined according to a weighting of control parameters which are used to control the model, the first parameters defining the range of variation of the second and third parameters;
the model animated on the basis of the control parameters is displayed on a display device.

2. The method according to claim 1, **characterized in that** the first, second and/or third parameters are weighted in a predetermined manner and then are combined to define the control parameters.

3. The method according to any one of claims 1 to 2,
**characterized in that**
prosodic parameters are derived from at least one selected emotion pattern; and that
the speech signals corresponding to speech utterances of the natural person are modified on the basis of the prosodic parameters (audio morphing) and reproduced acoustically.

4. The method according to any one of claims 1 to 3,
**characterized in that**
predetermined voice patterns are stored, and that at least one predetermined voice pattern is selected and reproduced acoustically.

5. The method according to any one of claims 1 to 4,
**characterized in that**
the second parameters include movement and texture parameters and the third parameters include animation parameters for lip and mouth movements.

6. A model-based audio and video system, in particular for carrying out the method according to any one of claims 1 to 5, comprising
a first memory (41) capable of storing at least one parameter-controllable model representing a virtual figure;
a second memory (70) storing predetermined animation patterns representing emotion and movement patterns;
means (60) for selecting at least one animation pattern;
first generation means (80, 85) for generating first parameters for controlling the model from at least one selected predetermined animation pattern;
a camera (20) for capturing a natural person,
a video analyzer (21) for deriving second parameters for controlling the model from the video signals provided by the camera (20);
an electroacoustic transducer (50) for generating speech signals from speech utterances of a natural person;
a phoneme-to-viseme conversion means (51) for deriving third parameters for controlling the model from the speech signals provided by the electroacoustic transducer (50);
**characterized by**
a second generation means (30) for defining control parameters from the first, second and third parameters according to a weighting and for subsequent combination, the first parameters defining the range of variation of the second and third parameters; and
a reproducing device (40) for representing the model modified on the basis of the control parameters.

7. The model-based audio and video system according to claim 6, **characterized in that**
the second generation means (30) includes a combinational logic that weights and combines the first, second and/or third parameters in a predeterminable manner to define the control parameters.

8. The model-based audio and video system according to claim 6 or 7, **characterized in that**
the first generation means include an emotion analyzer (85) for generating defined emotion parameters associated with selected emotion patterns, and a movement analyzer (80) for generating defined movement parameters associated with selected movement patterns.

9. The model-based audio and video system according to any one of claims 6 to 8, **characterized in that** the second generation means (30) is adapted to specifically select the first, second and/or third parameters.

10. The model-based audio and video system according to any one of claims 6 to 9, **characterized by**
an audio analyzer (90) that derives prosodic parameters from at least one selected emotion pattern;
a speech modifier (100) that modifies the speech signals received from the electroacoustic transducer (50) on the basis of the prosodic parameters and supplies the modified speech signals to an acoustic reproducing device (40).

11. The model-based audio and video system according to any one of claims 6 to 10, **characterized by**
a speech modifier (100) that is capable of alienating the speech signals received from the electroacoustic transducer (50).

12. The model-based audio and video system according to claim 10, **characterized by**
a speech synthesizer (110) that can be connected to the audio analyzer (90).

13. The model-based audio and video system according to claim 12, **characterized by**
a third memory (72) associated with the speech synthesizer (110), storing predetermined speech patterns and/or texts; and
an association means capable of associating one or more animation patterns with one or more speech patterns and/or texts.

14. The model-based audio and video system according to any one of claims 6 to 13, **characterized in that**
the second parameters include movement and texture parameters and the third parameters include animation parameters for lip and mouth movements.

15. The model-based audio and video system according to any one of claims 6 to 14, **characterized in that**
the parameter-controllable model is a facial model or a facial and body model, in particular according to the MPEG-4 standard.

16. The model-based audio and video system according to any one of claims 6 to 15, **characterized in that**
the second generation means (30) is adapted to convert the control parameters, the first, second and/or third parameters into a format compatible with the model.

## Revendications

1. Procédé de représentation d'un personnage virtuel au moyen d'un modèle pouvant être commandé par l'intermédiaire de paramètres, comprenant les étapes suivantes :
un modèle pouvant être commandé par l'intermédiaire de paramètres, lequel représente un personnage virtuel, est mis en mémoire ;
des motifs d'animation prédéfinis, lesquels représentent des motifs d'émotion et de mouvement, sont mis en mémoire dans une mémoire ;
au moins un motif d'animation est sélectionné ;
des premiers paramètres destinés à commander le modèle sont obtenus à partir de l'au moins un motif d'animation sélectionné ; en outre
des deuxièmes paramètres destinés à commander le modèle sont obtenus à partir des informations de vidéo d'une personne réelle enregistrée au moyen d'une caméra, et
des troisièmes paramètres destinés à commander le modèle sont obtenus à partir de signaux vocaux correspondant aux expressions vocales de la personne réelle ;
**caractérisé en ce que** :
les premiers, deuxièmes et troisièmes paramètres sont combinés conformément à une pondération des paramètres de commande au moyen desquels le modèle est commandé, les premiers paramètres établissant la plage de variations des deuxièmes et troisièmes paramètres ;
le modèle animé en fonction des paramètres de commande est représenté sur un dispositif d'affichage.

2. Procédé selon la revendication 1, **caractérisé en ce que** les premiers, deuxièmes et/ou troisièmes paramètres sont pondérés d'une manière prédéfinie puis combinés afin de former les paramètres de commande.

3. Procédé selon l'une quelconque des revendications 1 à 2, **caractérisé en ce que** :
des paramètres de prosodie sont obtenus à partir d'au moins un motif d'émotion sélectionné, et **en ce que**
les signaux vocaux correspondant aux expressions vocales de la personne réelle sont modifiés en fonction des paramètres de prosodie (morphing sonore) et reproduits acoustiquement.

4. Procédé selon l'une quelconque des revendications 1 à 3, **caractérisé en ce que** :
des motifs vocaux prédéfinis sont mis en mémoire et **en ce que**
au moins un motif vocal prédéfini est sélectionné et reproduit acoustiquement.

5. Procédé selon l'une quelconque des revendications 1 à 4, **caractérisé en ce que** les deuxièmes paramètres contiennent des paramètres de mouvement et de texture et les troisièmes paramètres contiennent des paramètres d'animation pour les mouvements des lèvres et de la bouche.

6. Système audio et vidéo basé sur un modèle, en particulier pour la mise en oeuvre du procédé selon l'une quelconque des revendications 1 à 5, comprenant :
une première mémoire (41) dans laquelle au moins un modèle, qui peut être commandé par l'intermédiaire de paramètres et qui représente un personnage virtuel, peut être mis en mémoire,
une deuxième mémoire (70), dans laquelle des motifs d'animation prédéfinis, lesquels représentent des motifs d'émotion et de mouvement, sont mis en mémoire ;
un dispositif (60) pour la sélection d'au moins un motif d'animation ;
un premier dispositif de production (80, 85) pour la production de premiers paramètres destinés à commander le modèle à partir d'au moins un motif d'animation prédéfini sélectionné,
une caméra (20) pour l'enregistrement d'une personne réelle,
un analyseur de vidéo (21) pour l'obtention de deuxièmes paramètres destinés à commander le modèle à partir des signaux vidéo fournis par la caméra (20),
un convertisseur électroacoustique (50) pour la production de signaux vocaux à partir d'expression vocales d'une personne réelle,
un dispositif de transformation de phonème/de visème (51) pour l'obtention de troisièmes paramètres destinés à commander le modèle à partir des signaux vocaux fournis par le convertisseur électroacoustique (50),
**caractérisé par** :
un deuxième dispositif de production (30) pour la formation de paramètres de commande à partir des premiers, deuxièmes et troisièmes paramètres conformément à une pondération suivie d'une combinaison, les premiers paramètres établissant la plage de variations des deuxièmes et troisièmes paramètres, et
un dispositif de reproduction (40) pour la représentation du modèle modifié en fonction des paramètres de commande.

7. Système audio et vidéo basé sur un modèle selon la revendication 6, **caractérisé en ce que** le deuxième dispositif de production (30) contient une logique de combinaison qui pondère et combine les premiers, deuxièmes et/ou troisièmes paramètres d'une manière pouvant être prédéfinie, afin de former les paramètres de commande.

8. Système audio et vidéo basé sur un modèle selon la revendication 6 ou, **caractérisé en ce que** le premier dispositif de production comprend un analyseur d'émotion (85) destiné à produire des paramètres d'émotion définis, qui font partie des motifs d'émotion sélectionnés, et un analyseur de mouvement (80) pour la formation de paramètres de mouvement définis, qui font partie des motifs de mouvement sélectionnés.

9. Système audio et vidéo basé sur un modèle selon l'une quelconque des revendications 6 à 8, **caractérisé en ce que** le deuxième dispositif de production (30) est conçu pour sélectionner de manière ciblée les premiers, deuxièmes et/ou troisièmes paramètres.

10. Système audio et vidéo basé sur un modèle selon l'une quelconque des revendications 6 à 9, **caractérisé par** :
un analyseur audio (90), qui obtient des paramètres de prosodie à partir d'au moins un motif d'émotion sélectionné,
un dispositif de modification vocale (100), qui modifie les signaux vocaux provenant du convertisseur électroacoustique (50) en fonction des paramètres de prosodie et qui amène les signaux vocaux modifiés à un dispositif de reproduction acoustique (40).

11. Système audio et vidéo basé sur un modèle selon l'une quelconque des revendications 6 à 10, **caractérisé par** un dispositif de modification vocale (100), qui peut dénaturer les signaux vocaux provenant du convertisseur électroacoustique (50).

12. Système audio et vidéo basé sur un modèle selon la revendication 10, **caractérisé par** un synthétiseur vocal (110), qui peut être relié à l'analyseur audio (90).

13. Système audio et vidéo basé sur un modèle selon la revendication 12, **caractérisé par** :
une troisième mémoire (72) associée au synthétiseur vocal (110), dans laquelle des motifs vocaux et/ou des textes prédéfinis sont mis en mémoire, et
un dispositif d'affectation, qui peut affecter un ou plusieurs motifs d'animation à un ou plusieurs motifs vocaux et/ou textes.

14. Système audio et vidéo basé sur un modèle selon l'une quelconque des revendications 6 à 13, **caractérisé en ce que** les deuxièmes paramètres contiennent des paramètres de mouvement et de texture et les troisièmes paramètres contiennent des paramètres d'animation pour les mouvements des lèvres et de la bouche.

15. Système audio et vidéo basé sur un modèle selon l'une quelconque des revendications 6 à 14, **caractérisé en ce que** le modèle pouvant être commandé par l'intermédiaire de paramètres est un modèle de visage ou un modèle de visage et de corps en particulier selon la norme MPEG-4.

16. Système audio et vidéo basé sur un modèle selon l'une quelconque des revendications 6 à 15, **caractérisé en ce que** le deuxième dispositif de production (30) est conçu pour transformer les paramètres de commande des premiers, deuxièmes et/ou troisièmes paramètres en un format compatible au modèle.
